# EUROPÄISCHE PATENTSCHRIFT

(11) **EP 0 496 951 B1**
(45) Veröffentlichungstag und Bekanntmachung des Hinweises auf die Patenterteilung: **22.06.1994**
(21) Anmeldenummer: 91118029.7
(22) Anmeldetag: 23.10.1991
(51) Int. Cl.: B60R 22/12

(54) **Sicherheitsgurtsystem mit einem Gurtroller**
Seat belt system with a retractor
Système de ceinture de sécurité avec enrouleur

(30) Priorität: 30.01.1991 DE 4102647
(43) Veröffentlichungstag der Anmeldung: 05.08.1992
(73) Patentinhaber: MERCEDES-BENZ AG, 70327 Stuttgart (DE)
(72) Erfinder: Harloff, Bernd, Dr., W-7031 Böblingen (DE); Jahn, Walter, W-7044 Ehningen (DE)

(56) Entgegenhaltungen:
- EP-A- 0 350 708
- DE-U- 8 634 154

## Beschreibung

Die Erfindung betrifft ein Sicherheitsgurtsystem mit einem Gurtroller und einem aufrollbaren Gurtbandabschnitt mit einem aufgebrachten Kennzeichnungsfeld.

Ein derartiges Sicherheitsgurtsystem, bei dem das Kennzeichnungsfeld aufgenäht oder aufgedruckt ist, kann der EP 0 350 708 A2 als bekannt entnommen werden. Hierbei liegt bei angelegtem Gurt das Kennzeichnungsfeld frei und kann somit Beschädigungen und Verschmutzungen erfahren, die die Leserlichkeit der Kennzeichnungsdaten nach einiger Zeit erschwert oder gar unmöglich macht.

Aufgabe der Erfindung ist es, das Kennzeichnungsfeld so anzuordnen, daß es bei angelegtem Gurt keiner Beschädigungs- und Verschmutzungsgefahr ausgesetzt ist, jedoch sichergestellt ist, daß im Bedarfsfall die Kennzeichnungsdaten schnell zugänglich sind.

Diese Aufgabe wird bei einem Sicherheitsgurtsystem nach dem Oberbegriff des Patentanspruches durch dessen kennzeichnende Merkmale gelöst.

Ein Ausführungsbeispiel der Erfindung wird nachfolgend anhand der Beschreibung näher erläutert.

Einem vorderen Sitz 1 in einem nicht näher dargestellten Personenkraftwagen ist ein Dreipunkt-Sicherheitsgurtsystem 2 zugeordnet. Von einem in der Mittelsäule 3 untergebrachten Gurtroller 4 fuhrt ein Gurtbandabschnitt 5 zu einer Gurtumlenkung 6 und tritt durch einen Schlitz 7 zum Fahrgastraum 8 hin aus.

Ist das Sicherheitsgurtsystem 2 nicht angelegt, so verläuft das fahrgastraumseitige Gurtband 9, in dessen Verlauf eine Gurtzunge 10 eingeschlauft ist, zu einem sitzseitigen Befestigungspunkt 11. Ein einem Gurtbandbereich 12 zugeordnetes Kennzeichnungsfeld 13, das z.B. von einem aufgenähten Etikett oder einer Klebe- oder Schmelzfolie gebildet werden kann, ist in den Gurtroller 4 eingezogen. Dabei ist es durch eine Abstimmung des Anbringungsortes des Kennzeichnungsfeldes 13 und dessen Länge mit dem Winkeldurchmesser möglich, die durch das Kennzeichnungsfeld 13 hervorgerufene örtliche Verdickung des Gurtbandabschnittes 5 so zu kompensieren, daß man einen weitestgehend runden Lauf der nicht dargestellten Wickelrolle des Gurtrollers 4 erhält. Derartige Maßnahmen entfallen, wenn das Kennzeichnungsfeld 13 durch einen Druckvorgang direkt auf den Gurtbandbereich 12 aufgebracht ist.

Bei angelegtem Sicherheitsgurtsystem 2, erfolgt - wie dargestellt - eine Aufteilung des fahrgastraumseitigen Gurtbandes 9 in einen Schrägschulter- und einen Beckengurtabschnitt, indem die Gurtzunge 10 in das sitzseitig befestigte Gurtschloß 14 eingesteckt wird. Bei dem Anlegevorgang wird der Gurtbandabschnitt 5 aus dem Gurtroller 4 ausgezogen und das Kennzeichnungsfeld 13 verbleibt selbst bei beleibten Personen und in extremen Sitzpositionen noch innerhalb der Mittelsäule 3 und ist somit keiner Beschädigungs- und Verschmutzungsgefahr ausgesetzt.

Soll das Kennzeichnungsfeld 13 inspiziert werden, so wird ausgehend von der dargestellten Auszugsposition durch Zug am austretenden fahrgastraumseitigen Gurtband 9 ein weiterer Gurtbandauszug herbeigeführt, wobei kurz vor dem Abwickeln des letzten Gurtwickels des Gurtrollers 4 das Kennzeichnungsfeld 13 aus dem Schlitz austritt und somit einer Betrachtung zugänglich ist.

Ist der Gurtroller 4 entgegen der Darstellung nicht verdeckt angeordnet, so verläßt das Kennzeichnungsfeld den Gurtroller nur dann, wenn zum Zwecke einer Betrachtung das Kennzeichnungsfeld das Gurtband über das übliche Maß hinaus ganz ausgezogen wird.

Wird der Gurtroller 4 in nicht dargestellter Weise verdeckt vom Sitz 1 aufgenommen, so kommt das Kennzeichnungsfeld durch Austritt aus einem zugeordneten Schlitz erst dann zum Vorschein, wenn das Gurtband ganz ausgezogen ist.

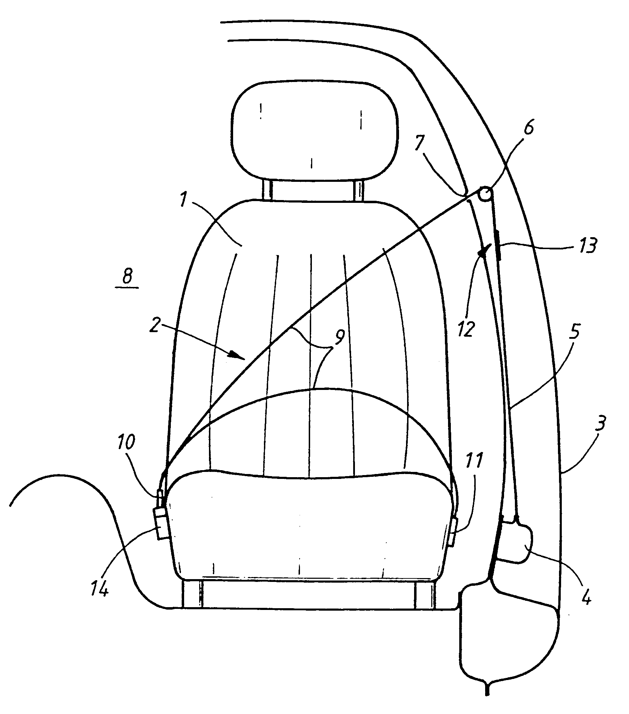

## Patentansprüche

1. Sicherheitsgurtsystem (2) mit einem Gurtroller (4) und einem aufrollbaren Gurtbandabschnitt (5,9) mit einem aufgebrachten Kennzeichnungsfeld (13),
**dadurch gekennzeichnet,**
daß das Kennzeichnungsfeld (13) einem Gurtbandbereich (12) zugeordnet ist, der erst bei einem vollständigen Gurtbandauszug einer Betrachtung zugänglich ist.

## Claims

1. A safety belt system (2) with a belt roller (4) and a belt strip portion (5, 9) which can be rolled up and which carries an identification panel (13) applied to it, characterised in that the identification panel (13) is associated with a portion (12) of belt strip which is only accessible to the eye when the belt strip is pulled out completely.

## Revendications

1. Système de ceinture de sécurité (2) comportant un enrouleur (4) et une partie de sangle (5, 9) enroulable avec un champ de désignation (13) appliqué, caractérisé en ce que le champ de désignation (13) est associé à une zone de sangle (12) qui ne peut être observée que dans le cas d'une extraction complète de la sangle.
